# EUROPÄISCHE PATENTSCHRIFT

(11) **EP 1 466 095 B1**
(45) Veröffentlichungstag und Bekanntmachung des Hinweises auf die Patenterteilung: **02.01.2008**
(21) Anmeldenummer: 02796580.5
(22) Anmeldetag: 06.12.2002
(51) Int. Cl.: F03D 11/04, F03D 1/06, F03D 1/00, E04H 12/28

(54) **TURM EINER WINDENERGIEANLAGE**
TOWER OF A WIND POWER INSTALLATION
TOUR D'INSTALLATION D'ENERGIE EOLIENNE

(30) Priorität: 07.12.2001 DE 10160306
(43) Veröffentlichungstag der Anmeldung: 13.10.2004
(73) Patentinhaber: Wobben, Aloys, 26607 Aurich (DE)
(72) Erfinder: Wobben, Aloys, 26607 Aurich (DE)
(74) Vertreter: Göken, Klaus G.
(86) Internationale Anmeldenummer: PCT/EP2002/013844
(87) Internationale Veröffentlichungsnummer: WO 2003/048570

(56) Entgegenhaltungen:
- WO-A-94/05485
- DE-A- 10 033 845
- DE-A- 19 547 901
- DE-U- 29 809 541
- PATENT ABSTRACTS OF JAPAN vol. 1998, no. 04, 31. März 1998 (1998-03-31) & JP 09 324460 A (YAMAKI KENZAI KK), 16. Dezember 1997 (1997-12-16)
- PATENT ABSTRACTS OF JAPAN vol. 2002, no. 03, 3. April 2002 (2002-04-03) & JP 2001 317678 A (NKK CORP), 16. November 2001 (2001-11-16)

## Beschreibung

Es gibt verschiedene Türme von Windenergieanlagen, vornehmlich Gittermasttürme, Stahlrohrtürme oder Betontürme. Bei Türmen aus Beton gibt es verschiedene Möglichkeiten der Herstellung, u. a. auch die Errichtung von Türmen aus Spannbeton-Fertigteilen, wobei die einzelnen Spannbeton-Fertigteile jeweils Segmente bilden, die aufeinander gelegt und dann miteinander verspannt werden. Ein Verfahren zur Herstellung eines Turmes aus Spannbeton-Fertigteilen ist beispielsweise aus DE 100 33 845.3 bekannt, welches zum Stand der Technik gemäß Art. 54(3) EPÜ gehört. Ein weiteres Verfahren zur Herstellung eines Turmes ist aus DE 29809541 U1 bekannt.

Bei solchen Türmen aus Betonsegmenten liegen die einzelnen Segmente (jedes Segment hat praktisch eine andere Form) nicht nur einfach aufeinander, sondern sind auch über eine entsprechende Verbundmasse miteinander verbunden. Diese Verbundmassen können ein Polymer (z. B. Epoxitharz) sein und die Schichtdicke der Verbundmasse beträgt regelmäßig wenigstens 2 mm.

Wird nun ein solcher segmentartiger Turm hergestellt, so wird nach Positionierung eines Segments auf der Oberseite des Segments die Verbundmasse aufgetragen, die dann ihrerseits nach Auflage des nächsten Segments aushärten kann. Hieran schließt sich wiederum der Auftrag von Verbundsmasse auf das neu aufgelegte Segment an usw.

Es kann sich u.U. aber ein Problem mit der Verbundmasse dann einstellen, wenn der Turm in der kalten Jahreszeit aufgestellt wird. Zum Aushärten benötigt nämlich die Verbundmasse regelmäßig eine Mindesttemperatur und ist die Außentemperatur gering, beispielsweise um 0° C, tritt entweder keine Aushärtung der Verbundmasse ein oder die Aushärtung dauert sehr lange, was die gesamte Errichtung des Turms erheblich verzögert.

Aufgabe der Erfindung ist es, die Erstellung eines Turms bestehend aus aufeinander liegenden Segmenten, wobei zwischen den Segmenten eine Verbundmasse liegt, zu beschleunigen.

Die Aufgabe wird erfindungsgemäß mit den Merkmalen nach Anspruch gelöst. Vorteilhafter Weiterbildungen sind in den Unteransprüchen beschrieben.

Gemäß der Erfindung ist wenigstens eine Seite von aufeinanderliegenden Segmenten mit einem Heizmodul versehen und dieses Heizmodul besteht bevorzugt aus einem einfachen Heizdraht, PCT-Widerstandsdraht oder auch Stahldraht (Schweißdraht).

Wird ein solcher Draht von einem großen Strom, beispielsweise im Bereich von 70 bis 150 A durchströmt, so erhitzt sich der Draht und die auf der Oberseite des Segments aufgebrachte Verbundmasse kann trotz kalter Außentemperaturen in der gewünschten Weise schnell aushärten.

Zur Erzielung einer guten Heizwirkung ist es vorteilhaft, wenn das Heizmodul ganzflächig innerhalb des oberen Bereichs eines Betonsegments ausgebildet ist, um einen größtmögliche Wärmeübertrag zur Verbundmasse zu erreichen.

Diese große Wärmewirkung lässt sich beispielsweise auch dadurch erzielen, indem ein Heizdraht mäanderförmig innerhalb des oberen Bereichs im Beton des Turmsegments angeordnet wird und von diesem Heizdraht dann lediglich nur noch die beiden Anschlüsse zugänglich sind. An diese Anschlüsse kann beispielsweise ein üblicher Schweißtransformator angeschlossen werden, welcher in der Lage ist, einen hohen Strom durch Draht zu schicken, so dass sich dann die gewünschte Erwärmung zum oberen Bereich des Segments und damit auch der Verbundmasse einstellt.

Der Erfindung ist nachfolgend zeichnerisch dargestellt. In der Figur zeigen:
- Figur 1: Blick auf ein erfindungsgemäßes Turmsegment;
- Figur 2: eine Messkurve verschiedener Messpunkte und der Luft eines erfindungsgemäßen Turmsegments;
- Figur 3: Darstellung der Verlegung eines Heizdrahts im Turmsegment bei aufeinander liegenden Segmenten;
- Figur 4: eine Ansicht eines aus Turmsegmenten bestehenden Turms einer Windenergieanlage.

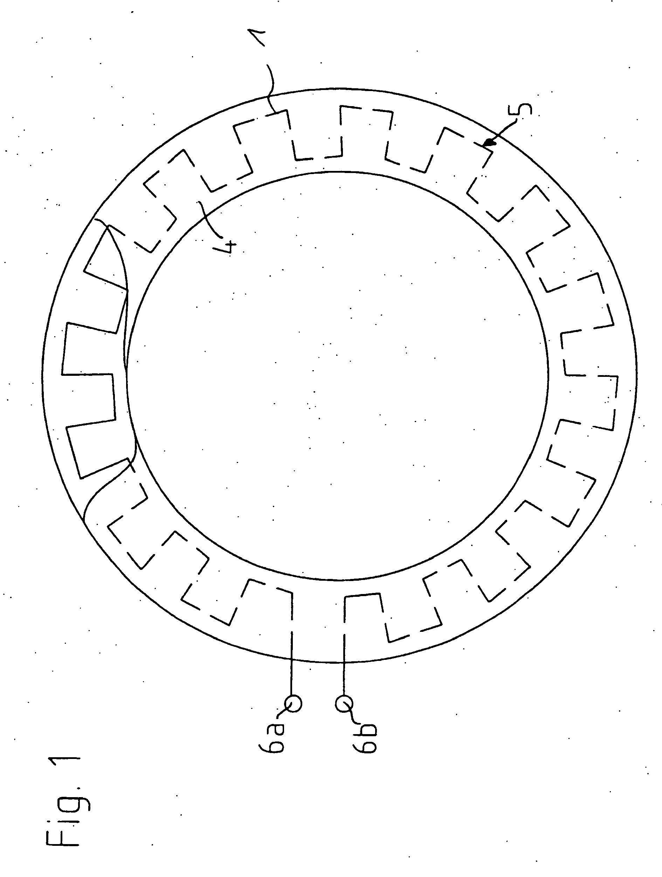

Figur 1 zeigt ein kreisrundes Turmsegment 4 (mit Blick von oben) mit einem Ausriss aus der Oberfläche eines Turmsegments. Hierbei ist zu erkennen, dass ein Heizmodul 1 im oberen Bereich 2 des Turmsegments 4 eingelassen ist, wobei das Heizmodul aus einem Heizdraht 5 besteht, welcher mäanderförmig innerhalb des Betons des Turmsegments 4 liegt. Zu erkennen sind auch zwei Anschlüsse 6a, 6b für den Heizdraht 5, an den beispielsweise ein Schweißtrafo angeschlossen werden kann, welcher einen hohen Strom erzeugt, der durch den Heizdraht 5 geschickt werden kann, damit sich dieser erwärmt und dann auch für eine Erwärmung des Betons im obersten Bereich des Segments sorgt, so dass die auf dem Segment liegende Verbundmasse aushärten kann.

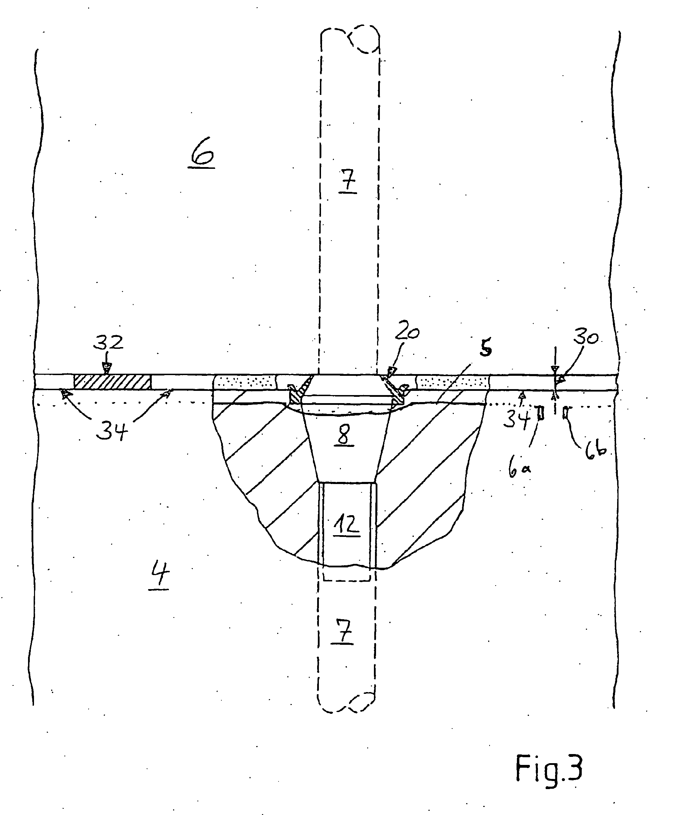

Figur 3 zeigt eine Darstellung von aufeinander gelegten Segmenten. Hierbei sind zwei übereinander angeordnete Segmente 4, 6 dargestellt, von denen das untere Segment 4 im Bereich einer Spannbetonvorrichtung (auf die es hier nicht besonders ankommt) aufgebrochen ist. Dort ist auch der Heizdraht 5 zu sehen, der im oberen Bereich des Turmsegments verlegt ist. Die Segmente 4 und 6 sind derart übereinander angeordnet, dass sich Hüllrohre 7 einer Spanneinrichtung in den Segmenten 4, 6 im Wesentlichen fluchtend gegenüber stehen. Die Spannvorrichtung 8 ist formschlüssig in das untere Segment 4 eingelassen und die Oberkante des umlaufenden Randes schließt bündig mit der Oberfläche des Segmentes 4 ab. Der rohrförmige Abschnitt 12 greift in das im Segment 4 integrierte Hüllrohr 7 ein.

In dem zur Aufnahme einer Dichtung 20 vorgesehenen Teil der Vorrichtung 8 ist die Dichtung 20 eingesetzt und liegt mit ihrer Oberseite fest an dem oberen Segment 6 an.

Bei der Errichtung des Turmes aus Segmenten 4, 6 werden zunächst auf die nach oben weisenden Flächen des zuletzt eingebauten (unteren) Segments 4 bevorzugt drei Abstandshalter 32 mit etwa gleichem Abstand auf dem Umfang verteilt angeordnet.

Diese Abstandshalter 32 sind bevorzugt aus Holz und weisen eine Höhe von etwa 5 mm (abhängig von der Oberflächenrauhigkeit der Segmente) auf, die dem vorgesehenen Abstand 30 zwischen den Segmenten 4, 6 nach der Montage entspricht. Das E-Modul von Holz liegt in einem Bereich, der einerseits gestattet, dass Holz den im Turm auftretenden Kräften einige Zeit standhalten kann, andererseits jedoch bewirkt, dass Unebenheiten der einander gegenüberliegenden Oberflächen der Segmente 4, 6 sich in das Holz eindrücken und somit Abplatzungen an den Segmenten 4, 6 vermieden werden.

Dabei kann durch eine geeignete Wahl der Höhe der Abstandshalter 32 (der Abstand kann auch etwa nur 2 mm betragen) entsprechend den unvermeidbaren Fertigungsgenauigkeiten der Segmente 4, 6 eine Nivellierung der Segmente 4, 6 erreicht werden.

Vor der Auflage des oberen Segments 6 und des unteren Segments 4 wird eine Verbundmasse 34 auf die obere Fläche des Segments 4 flächendeckend aufgetragen. Dabei werden die Positionen, an denen sich die Hüllrohre 7, 8 in den Segmenten 4, 6 bzw. des Hüllrohrs 7 im oberen Segment 6 und die Vorrichtung 8 mit der Dichtung 20 im unteren Segment 4 gegenüberliegen, beim Auftragen der Verbundmasse 34 ausgespart, indem die Verbundmasse 34 bis an die Auskragung 23 heran aufgetragen wird.

Die flächendeckend aufgetragene Verbundmasse 34 ist bevorzugt ein Epoxidharz (oder ein anderes Polymer) und wird mindestens mit einer Schichtdicke von etwa 2 bis 6 mm aufgetragen, die im Wesentlichen dem vorgesehenen Abstand 30 zwischen den Segmenten 4 und 6 entspricht.

Beim Aufbau eines solchen Turms in der kalten Jahreszeit, wo nicht selten (auch weil Windenergieanlagen auch an sehr ungeschützten Plätzen auf gestellt werden) die Temperatur ganztägig unterhalb des Gefrierpunkts liegt, härtet das Epoxidharz normalerweise wenn überhaupt nur sehr langsam aus, was insgesamt das Aufstellen des Turms sehr verlangsamt, weil die weitere Positionierung weiterer Segmente auch das Aushärten des Epoxidharzes zwischen den unteren bereits positionierten Segmenten voraussetzt.

Der Turmaufbautrupp kann dann bei dem erfindungsgemäßen Turm die bereits in den Segmenten ausgebildete Heizung bzw. Heizmodule aktivieren, indem beispielsweise an den Heizdraht über die Anschlüsse 6a, 6b ein Schweißtrafo angeschlossen wird. Der Schweißstrom liegt in einem Bereich von 60 bis 150 A (oder darunter oder darüber). Nunmehr erwärmt sich das Segment 4 an seiner Oberseite, der Verbundmasse ebenfalls, und die Verbundmasse kann wie gewünscht innerhalb von kurzer Zeit aushärten.

Da die Ausbildung eines Heizmoduls in Form eines normalen Stahldrahts oder Heizdrahts oder Schweißdrahts sehr günstig und billig ist, kann dieser auch nach der Aushärtung des Turms im Beton des Segments verbleiben. Ohnehin enthält ein Turmsegment eine Vielzahl von Stahlverstrebungen, um seine Festigkeit zu erhöhen.

Um einen Kontakt des Heizdrahts 5 mit anderen elektrisch leitenden Teilen im Segment zu vermeiden, kann es auch günstig sein, wenn der Heizdraht 5 mit einer wärmeleitenden, jedoch elektrisch isolierenden Schicht versehen ist. Eine solche Isolierung sollte jedoch Temperaturen bis zu 60 bis 100° C form- und hitzebeständig sein.

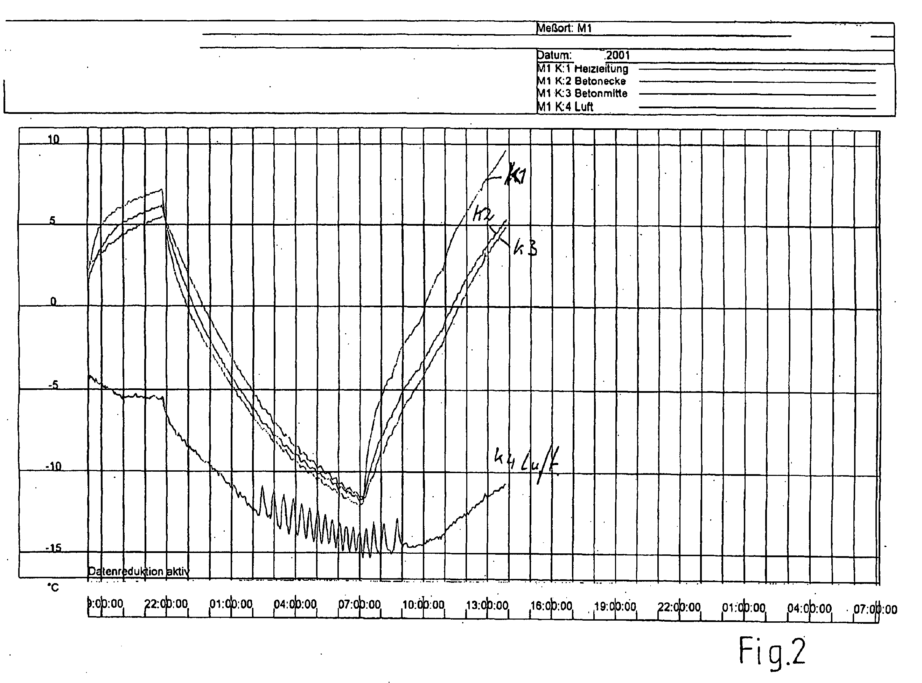

Figur 2 zeigt des Temperaturverhalten einer erfindungsgemäßen Ausführung. Hierbei ist zu sehen, wie die Außentemperaturkurve zunächst einmal auf einen Bereich von etwa -12 bis -15° C absinkt.

Oberhalb der Temperaturkurve befinden sich die Kurven K1, K2 und K3, wobei K1 die Temperatur der Heizleitung (Heizmodul, Heizdraht), K2 die Temperatur in eine Betonecke und K3 die Temperatur in der Betonmitte (Oberfläche des Segments) darstellt. Wie zu erkennen, steigt die Temperatur, sobald der Heizdraht 5 von einem Strom von etwa 80 bis 90 A durchflossen wird, fast linear an und mit der Temperatur des Heizdrahts um eine kurze Zeit verzögert auch die Temperatur des Betons. Somit kann die Verbundmasse, im speziellen Fall also das Epoxidharz, schnell aushärten und die Ablage weiterer Segmente kann schnell voranschreiten.

Selbstverständlich ist es auch möglich, dass der Heizdraht nicht nur im obersten Bereich des Untersegmentes, sondern ergänzt auch im unteren Bereich des oberen Segmentes 6 ausgebildet, so dass noch mehr Wärme an die Verbundmasse herangeführt werden kann, was nochmals die Aushärtung beschleunigt.

Die erfindungsgemäße Variante zur Erwärmung eines Segments hat den Vorteil, dass sie sehr günstig ist, schließlich liegen die Kosten des normalen Stahldrahts, welchen man als Heizdraht verwendet, im Bereich von wenigen Pfennigen pro Meter.

Auch ist die Verlegung eines solchen Heizdrahts sehr unkompliziert und kann bei der Segmentfertigung schnell fertig hergestellt werden.

Daher ist es auch nicht nachteilig, wenn der Heizdraht, selbst wenn er überhaupt nicht zum Einsatz kommt, weil der Turm bei warmen Temperaturen aufgestellt wird, im Segment selbst verbleibt.

Mit der Unterbringung des Heizdrahts ist es aber möglich, auch in der kalten Jahreszeit und damit witterungs- und jahreszeitunabhängig, die Türme von Windenergieanlagen aufzustellen.

Es versteht sich von selbst, dass die Verlegung des Heizdrahts nicht nur etwa mäanderförmig, sondern in jedweder anderen Form erfolgen kann, auch so, dass der Heizdraht selbst die Form eines Kreises annimmt.

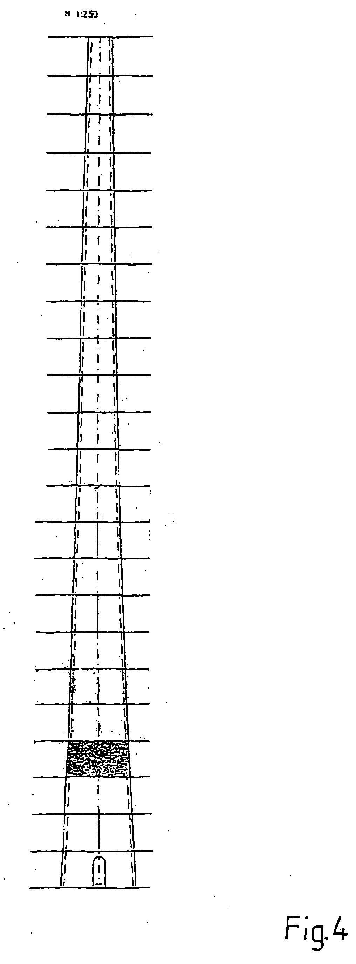

Figur 4 zeigt die Ansicht eines Turms, bestehend aus erfindungsgemäßen Turmsegmenten, die aufeinander gesetzt sind und mittels einer nicht dargestellten Spannvorrichtung gegeneinander verspannt sind.

## Patentansprüche

1. Turm einer Windenergieanlage, wobei der Turm aus aufeinander gesetzten Segmenten besteht und zwischen den aufeinander liegenden Segmenten eine Verbundmasse liegt,
**dadurch gekennzeichnet, dass** im oberen Bereich des unten liegenden Segments (4) und/oder im unteren Bereich des oben liegenden Segments (6) auf der dem gegenüberliegenden Segment zugewandten Seite des Segments ein Heizelement ausgebildet ist.

2. Turm nach Anspruch 1,
**dadurch gekennzeichnet, dass** das Heizelement aus einem Heizdraht (5) oder PTC-Widerstandsdraht besteht, welcher auf der Segmentoberseite oder unterhalb der Oberseite im Segment (4) selbst angeordnet ist.

3. Turm nach Anspruch 2,
**dadurch gekennzeichnet, dass** der Heizdraht (5) oder PTC-Widerstandsdraht ein Draht ist, welcher zur Erwärmung mit Strom durchflossen wird.

4. Turm nach einem der vorhergehenden Ansprüche,
**dadurch gekennzeichnet, dass** der Heizdraht (5) an der Oberseite des Segments oder im oberen Bereich innerhalb des Segments (4) mäanderförmig verlegt ist.

5. Turm nach einem der vorhergehenden Ansprüche,
**dadurch gekennzeichnet, dass** zur Erwärmung des Heizdrahts (5) ein Stromanschluss (6a, 6b) ausgebildet, an dem beispielsweise ein Schweißtransformator oder eine andere stromerzeugende Einrichtung angeschlossen werden kann.

6. Windenergieanlage mit einem Turm nach einem der vorhergehenden Ansprüche.

## Claims

1. Tower of a wind power installation, wherein the tower consists of mutually superposed segments and there is a bonding material between the mutually superposed segments,
**characterised in that** a heating element is formed in the upper region of the lower segment (4) and/or in the lower region of the upper segment (6), on that side of the segment which is towards the opposing segment.

2. Tower according to claim 1,
**characterised in that** the heating element consists of a heating wire (5) or a PTC resistance wire which is arranged on the top side of the segment or below the top side in the segment (4) itself.

3. Tower according to claim 2,
**characterised in that** the heating wire (5) or the PTC resistance wire is a wire through which current flows for heating thereof.

4. Tower according to any one of the preceding claims,
**characterised in that** the heating wire (5) is laid in a meander configuration at the top side of the segment or in the upper region within the segment (4).

5. Tower according to any one of the preceding claims,
**characterised in that** to heat the heating wire (5) a current-connecting terminal (6a, 6b) is formed to which, for example, a welding transformer or another current-generating device can be connected.

6. Wind power installation having a tower according to any one of the preceding claims.

## Revendications

1. Tour d'une installation d'énergie éolienne, la tour se composant de segments posés les uns sur les autres et une masse d'assemblage est placée entre les segments empilés les uns sur les autres,
**caractérisée en ce que** dans la zone supérieure du segment se trouvant en bas (4) et/ou dans la zone inférieure du segment se trouvant en haut (6), un élément chauffant est réalisé sur la face du segment tournée vers le segment opposé.

2. Tour selon la revendication 1,
**caractérisée en ce que** l'élément chauffant est constitué d'un fil de chauffage (5) ou d'un fil de résistance en PTC, lequel est lui-même agencé sur la face supérieure du segment ou en dessous de la face supérieure dans le segment (4).

3. Tour selon la revendication 2,
**caractérisée en ce que** le fil de chauffage (5) ou le fil de résistance en PTC est un fil qui est traversé par du courant en vue de l'échauffement.

4. Tour selon l'une quelconque des revendications précédentes,
**caractérisée en ce que** le fil de chauffage (5) est mis en place sous forme de méandres au niveau de la face supérieure du segment ou dans la zone supérieure à l'intérieur du segment (4).

5. Tour selon l'une quelconque des revendications précédentes,
**caractérisée en ce qu'**un raccord électrique (6a, 6b) est réalisé en vue de l'échauffement du fil de chauffage (5), un transformateur de soudage ou un autre dispositif générateur de courant pouvant par exemple être raccordé audit raccord électrique.

6. Installation d'énergie éolienne comportant une tour selon l'une quelconque des revendications précédentes.
